# EUROPÄISCHE PATENTANMELDUNG

(11) **EP 3 553 476 A1**
(43) Veröffentlichungstag der Anmeldung: **16.10.2019**
(21) Anmeldenummer: 18166843.5
(22) Anmeldetag: 11.04.2018
(51) Int. Cl.: G01D 5/347

(54) **DREHGEBER MIT SPEKTRAL CODIERTER MASSVERKÖRPERUNG**

(71) Anmelder: Siemens Aktiengesellschaft, 80333 München (DE)
(72) Erfinder: Schimmer, Jürgen, 90473 Nürnberg (DE); Zettner, Jürgen, 90587 Veitsbronn (DE)

(57) **Zusammenfassung**

Vorgeschlagen wird ein Drehgeber (1) zur Ermittlung einer Drehwinkelposition und/oder einer Drehgeschwindigkeit und/oder einer Drehrichtung eines rotierenden Elements (2), insbesondere eines Servoantriebs, umfassend: ein Scheibenelement (3), das mit dem rotierenden Element (2) verbindbar ist, um dessen Rotation mitzumachen, wobei das Element eine Maßverkörperung (4) aufweist, wenigstens eine Strahlungsquelle (5), die beabstandet von dem Scheibenelement (3) angeordnet ist, und dazu ausgebildet und vorgesehen ist, eine Strahlung (6) auf das Scheibenelement (3) auszustrahlen, wobei eine Strahlungsintensität der Strahlung (6) eine von Null verschiedene spektrale Breite aufweist, und wenigstens ein Detektionselement (7) zur Detektion der von der Strahlungsquelle ausgestrahlten und von dem Scheibenelement reflektierten oder transmittierten Strahlung (6). Der Drehgeber (1) ist dadurch gekennzeichnet, dass die Maßverkörperung (4) auf dem Scheibenelement (3) wenigstens einen ersten Bereich (8a) und einen zweiten Bereich (8b) aufweist, die an voneinander verschiedenen Positionen auf dem Scheibenelement (3) angeordnet sind, wobei sich eine spektrale Reflexionseigenschaft und/oder eine spektrale Transmissionseigenschaft der beiden Bereiche (8a, 8b) voneinander unterscheiden.

## Beschreibung

Die Erfindung betrifft einen Drehgeber nach Anspruch 1. Außerdem betrifft die Erfindung ein Scheibenelement für einen Drehgeber nach Anspruch 10 und eine Verwendung eines Scheibenelements in einem Drehgeber nach Anspruch 13.

Der mechanische Drehwinkel elektrischer Motoren muss für Positionieraufgaben und als Motorregelungs-Feedback gemessen werden. Da in der Regel kurze Latenzzeiten für eine Verwendung in einer Regelung für die Messverfahren gefordert werden, müssen die Messverfahren schnell sein. Zur Erhöhung einer Genauigkeit der Messung ist in der Regel zudem ein Positionskorrekturverfahren notwendig, worauf im weiteren Verlauf noch detailliert eingegangen wird.

Speziell, aber nicht ausschließlich für Servoantriebe werden in der Regel optische, magnetische, induktive oder kapazitive, absolute und oder inkrementelle Drehwinkelgeber als Anbaugeber mit Eigenlagerung an die Antriebswelle gekuppelt oder aus Kostenersparnisgründen zunehmend als integrierte Geber verbaut.

Die Drehwinkelgeber umfassen eine Erfassungseinheit, welche die Maßverkörperung, also dasjenige Bauteil, welches den Drehwinkel codiert, abtastet. Der Drehwinkel wird als hochfrequenter vorliegender Positions-IST-Wert digital an die Steuerung übergeben. Sofern es sich um eine analoge Schnittstelle handelt, wird der Drehwinkel von dieser abgetastet (z.B. sin/cos-Geber) und der Positions-IST-Wert in der Steuerung errechnet.

Die Maßverkörperung soll möglichst klein ausgestaltet sein, um einen "passiven" Bauraum im Antrieb einzusparen. Zudem muss die Maßverkörperung möglichst exakt zentriert montiert werden, da ansonsten ein sogenannter Exzentrizitätsfehler auftritt. Dabei handelt es sich um einen sinusartigen Verlauf eines Fehlers in der Drehwinkelmessung mittels der Maßverkörperung im Verlauf einer Umdrehung des elektrischen Motors. Eine nicht exakte Montage einer Einheit zur Abtastung der Maßverkörperung kann darüber hinaus zu einer fehlerbehafteten Messung des Drehwinkels führen.

Herkömmliche Drehgeber mit Maßverkörperungen im Stand der Technik müssen aufwändig und damit kostenintensiv montiert werden, um hohe Winkelgenauigkeiten zu ermöglichen. Eine Verwendung von Drehgebern, die auf einer optischen Messung beruhen, ist besonders kostenintensiv, da zumeist hochgenaue Montage der Erfassungseinheit zur Maßverkörperung notwendig ist. Als integrierte Geber sind sie zudem schmutzanfällig und es ist sehr aufwändig, sie dauerhaft durch den Motorhersteller zu kapseln.

Um die erforderliche hohe Genauigkeit in der Winkelmessung zu realisieren, müssen sehr fein strukturierte Maßverkörperungen verwendet werden, die beispielsweise mit Graycodes, Binärmustern und Inkrementalperioden / Strichteilungen versehen sind. Diese werden meist mit maskenbasierten Lithografieverfahren auf Glasscheiben aufgebracht, um deren Feinheit und Exaktheit zu gewährleisten. Je feiner die Teilung jedoch ausgestaltet ist, desto anfälliger ist jedoch der Drehgeber gegenüber Verschmutzung, was aufwändige Maßnahmen zur Vermeidung einer Verschmutzung mit sich bringt.

Herkömmliche Drehgeber besitzen eine Abtasteinheit, im Falle der Forderung nach Safety oder Redundanz auch zwei Abtasteinheiten. Die Codierungsspuren sind auf der Maßverkörperung meist kleinräumig parallel, seriell oder als sogenannte Noniusspuren kreisförmig angeordnet.

Die Maßverkörperungen, welche im Stand der Technik als codierte Multipol-Magneträder/Zahnräder, oder als induktiv oder kapazitiv wirkende Leiterplattenstrukturen oder optische Glas- oder Kunststoffscheiben mit transmissiv oder reflektiv abzutastenden Strukturen im Mikrometerbereich bekannt sind, müssen für hohe Genauigkeiten, beispielsweise in einem Bereich von über 18 bit, aufwändig gefertigt (Mikrostrukturtechnik) werden, da die Strukturgrößen mit zunehmender Genauigkeitsklasse immer kleiner werden.

In der Druckschrift WO 2013/098803 A1 ist eine Messanordnung mit umfänglich verteilten optischen Sensoren zur Abtastung codierter Spuren offenbart. Eine Zuordnung von Antwortsignalen der Sensoren pro Drehwinkel erfolgt mittels einer vordefinierten oder eingelernten Liste. Dabei werden Zwischenpositionswerte des zu vermessenden rotierenden Elementes mittels Interpolation ermittelt.

Die Druckschrift US 2015/0354992 A1 offenbart doppelte Abtasteinrichtung bzw. doppelte Spuren auf der Maßverkörperung, um eine direkte Messung des aus einem nicht optimalen Einbau eines Drehgebers resultierenden Exzentrizitätsfehlers zu ermöglichen. Hieraus kann anschließend der fehlerbehaftete Positionswert des zu vermessenden rotierenden Elementes korrigiert werden.

Die DE 10 2004 038 621 A1 offenbart ein Verfahren zur Kompensation von Offset-, Amplituden- oder Phasenfehlern bei der Detektion des Drehwinkels.

Der Erfindung liegt die Aufgabe zugrunde, einen Drehgeber und ein dazugehöriges Scheibenelement anzugeben, die die vorgenannten Nachteile des Standes der Technik vermeiden und auf einfache und kostengünstige Art und Weise hergestellt werden können.

Diese Aufgabe wird gelöst durch einen Drehgeber nach Anspruch 1, durch ein Scheibenelement nach Anspruch 10 und durch die Verwendung eines Scheibenelements nach Anspruch 13. Vorteilhafte Weiterbildungen ergeben sich aus den abhängigen Ansprüchen.
Ein Drehgeber zur Ermittlung einer Drehwinkelposition und/oder einer Drehgeschwindigkeit und/oder einer Drehrichtung eines rotierenden Elements, insbesondere eines Servoantriebs, der eingangs beschriebenen Art umfasst Folgendes:
- ein Scheibenelement, das mit dem rotierenden Element verbindbar ist, um dessen Rotation mitzumachen, wobei das Element eine Maßverkörperung aufweist;
- wenigstens eine Strahlungsquelle, die beabstandet von dem Scheibenelement angeordnet ist, und dazu ausgebildet und vorgesehen ist, eine Strahlung auf das Scheibenelement auszustrahlen, wobei eine Strahlungsintensität der Strahlung eine von Null verschiedene spektrale Breite aufweist; und
- wenigstens ein Detektionselement zur Detektion der von der Strahlungsquelle ausgestrahlten und von dem Scheibenelement reflektierten oder transmittierten Strahlung.

Der Drehgeber ist dadurch gekennzeichnet, dass die Maßverkörperung auf dem Scheibenelement wenigstens einen ersten Bereich und einen zweiten Bereich aufweist, die an voneinander verschiedenen Positionen auf dem Scheibenelement angeordnet sind, wobei sich eine spektrale Reflexionseigenschaft und/oder eine spektrale Transmissionseigenschaft der beiden Bereiche voneinander unterscheiden.

Unter einem Drehgeber wird vorliegend ein Sensorsystem verstanden, welches dazu ausgebildet und vorgesehen ist, einen Drehwinkel eines Bauelements, beispielsweise eines Motors, zu erfassen und zur weiteren Verarbeitung als analoges oder als digitales Signal auszugeben.

Bei dem Scheibenelement kann es sich, ohne sich hierauf zu beschränken, um eine Glas- oder Kunststoffscheibe handeln.

Unter einer Maßverkörperung wird die Repräsentation von festen Werten oder einer Abfolge von festen Werten einer Messgröße, im vorliegenden Fall des Drehwinkels, verstanden.

Der erfindungsgemäße Drehgeber codiert den Drehwinkel mittels der Maßverkörperung spektral. Im einfachsten Fall weist die Maßverkörperung einen ersten Bereich mit einer ersten Farbe und einen zweiten Bereich mit einer zweiten, von der ersten Farbe verschiedenen Farbe auf. Dabei repräsentiert die Maßverkörperung in diesem Fall zwei Drehwinkel, die in der Regel gleich groß bemessen würden, d.h. jede Farbe steht für einen Drehwinkel von 180 Grad.

Die Strahlungsquelle ist dazu ausgebildet und vorgesehen, eine Strahlung mit einer Strahlungsintensität, die eine von Null verschiedene spektrale Breite aufweist, auf das Scheibenelement mit der darauf befindlichen Maßverkörperung abzustrahlen. Der Drehwinkel kann mittels einer Detektion einer Intensität der von dem Scheibenelement zurückgestrahlten Strahlung ermittelt werden. Dabei ist die von dem Detektionselement gemessene Strahlungsintensität von der Strahlungsintensität der von der Strahlungsquelle abgestrahlten Strahlung, den spektral selektiven Reflexions- oder Transmissionseigenschaften des Scheibenelements, genauer der darauf befindlichen Maßverkörperung, und der (bekannten) spektralen Sensitivität des Detektionselements abhängig.

Mit anderen Worten ist der Drehgeber mittels einer Erkennung der spektralen Antwort des Scheibenelements auf eine Anregung mit einer bekannten Strahlungsquelle dazu in der Lage, einen Drehwinkel bzw. welche rotatorische Lage eines rotierenden Elements zu bestimmen.

Die Maßverkörperung kann mittels eines Druckverfahrens hergestellt worden sein, wobei die gedruckte Maßverkörperung vorzugsweise mit einer Schutzschicht, insbesondere einem Epoxidharz, überzogen wurde. Eine Auflösung der gedruckten Maßverkörperung kann vorteilhafterweise bei 1200 dpi (dots per inch) liegen.

Alternativ können Strukturen mit Strukturgrößen im Bereich einer Wellenlänge der verwendeten Strahlung mittels eines additiven Verfahrens, beispielsweise Nano-3D, einer Prägetechnik oder dergleichen derart hergestellt werden, dass diese spektral selektiv wirken, insbesondere unter Ausnutzung von Beugungs- oder Interferenzphänomenen.

Alternativ kann auch eloxiertes Aluminium als Maßverkörperung verwendet werden. Die Schichtbildungsvorgänge werden dabei durch die Wahl des Elektrolyten und dessen Konzentration, der Temperatur, Stromart (Gleichstrom/ Wechselstrom), der elektrischen Stromdichte, der Spannung und der Dauer der Behandlung beeinflusst. Im Gegensatz zu einem Färbeverfahren beim Eloxieren kann die Farbe des Aluminiums bzw. dessen spektrale Reflektivität/Transmissivität bei einem Interferenzfärberverfahren nicht durch eingelagerte Fremdionen, sondern durch eine Interferenz innerhalb der Aluminiumoxidschicht erzeugt werden. Je nach Schichtdicke der Oxidschicht können unterschiedliche Farben reproduzierbar dargestellt werden.

Ebenfalls können lokal variierende Schichtdicken einer Beschichtung des Scheibenelements eingesetzt werden, um lokal spektral selektive Reflexions- bzw. Transmissionseigenschaften des Scheibenelements als Maßverkörperung zu schaffen. Beispielsweise können Bragg-Gitter verwendet werden. Ebenfalls möglich sind CD/DVD oder Prägefolien mit Hologrammen die spektral selektiv diffraktiv für auf sie fallende Strahlung wirken. Auch photonische Kristalle sind als Werkstoff für die Maßverkörperung möglich. Diese umfassen strukturierte Halbleiter, Gläser oder Polymere und sind dazu ausgebildet, eine spektral selektive Reflexion bzw. Transmission einer einfallenden Strahlung auf der Maßverkörperung zu ermöglichen.

Alternativ können der erste Bereich und der zweite Bereich der Maßverkörperung auch eine unterschiedliche Anzahl an übereinander angeordneten Schichten aufweisen.

Bei einer vorteilhaften Weiterbildung des Drehgebers ist die Strahlungsquelle wenigstens eine Leuchtdiode, vorzugsweise eine Mehrzahl an Leuchtdioden. Dabei sind die Leuchtdioden bevorzugt dazu ausgebildet, Strahlung mit sich spektral voneinander unterscheidenden Strahlungsintensitäten auszustrahlen. Besonders bevorzugt umfasst die Strahlungsquelle eine oder mehrere RGB-Leuchtdioden (RGB = Rot/Grün/Blau).

Leuchtdioden an sich zeichnen sich insbesondere durch kurze Schaltzeiten, einen geringen Energieverbrauch und eine hohe Lebensdauer aus. Durch die Verwendung mehrerer Leuchtdioden, die sich hinsichtlich ihrer spektralen Emission voneinander unterscheiden (was auch durch die Wahl einer oder mehrerer RGB-Leuchtdioden erreicht werden kann), können gezielt bestimmte Wellenlängenbereiche für die auf die Maßverkörperung abgestrahlte Strahlung vorgegeben werden - sowohl zeitlich als auch räumlich gesehen.

Eine spektrale Abstrahlcharakteristik von Leuchtdioden ist zudem gut bekannt. Darüber hinaus sind sie in vielen verschiedenen spektralen Bereichen, vom ultravioletten Bereich bis ins Nahinfrarot, kostengünstig kommerziell verfügbar.

Bei Verwendung einer zweifarbigen Maßverkörperung können beispielsweise zwei Leuchtdioden zum Einsatz kommen, deren Mittenwellenlängen den beiden Farben der Maßverkörperung entsprechen. Dadurch wird die eine Farbe der Maßverkörperung ein maximales Signal in dem Detektionselement erzeugen, wenn die Maßverkörperung mit einer ersten der beiden Leuchtdioden angestrahlt wird. Entsprechend wird die andere Farbe der Maßverkörperung ein maximales Signal in dem Detektionselement erzeugen, wenn die Maßverkörperung mit der anderen der beiden Leuchtdioden angestrahlt wird.

Durch die bei Verwendung von Leuchtdioden möglichen kurzen Schaltzeiten wird ein serieller Betrieb ermöglicht. Der vorliegende Drehwinkel kann mehrfach in verschiedenen Spektralbereichen und damit sicherer bestimmt werden.

Alternativ können die Leuchtdioden räumlich unterschiedlich angeordnet sein, so dass eine Trennung der spektralen Informationen nicht zeitlich versetzt, sondern gleichzeitig stattfinden kann.

Zudem kann durch die Wahl einer Mehrzahl an Leuchtdioden bzw. durch die Verwendung von RGB-Leuchtdioden in Verbindung mit einer zeitlichen Modulation der Strahlungsquelle eine gewisse Redundanz bei der Auswertung der von der Maßverkörperung reflektierten oder transmittierten Strahlung erzielt werden. Dies wird dadurch erreicht, dass in direkter Abfolge hintereinander verschiedene Leuchtdioden ihre (sich voneinander unterscheidende) Strahlung emittieren und auf die Maßverkörperung abstrahlen. Jedes emittierte Strahlungsspektrum erzeugt dabei eine unterschiedliche Reflexion bzw. Transmission auf den sich spektral voneinander unterscheidenden Bereichen der Maßverkörperung.

Durch eine Vielzahl von spektral unterschiedlichen Leuchtdioden und/oder spektral separierbaren Farben der Maßverkörperung lassen sich einen Vielzahl von Winkelpositionen kodieren und detektieren. Somit lässt sich auch eine Genauigkeit der Detektion des (absoluten) Drehwinkels erhöhen.

Das Detektionselement zur Detektion der von der Strahlungsquelle ausgestrahlten und von dem Scheibenelement reflektierten oder transmittierten Strahlung ist vorzugsweise wenigstens eine Photodiode, vorzugsweise eine Mehrzahl an Photodioden. Dabei ist die Photodiode oder die Mehrzahl an Photodioden bevorzugt auf Basis von Silizium ausgebildet. Silizium-Photodioden sind weit verbreitet und kostengünstig. Die spektrale Sensitivität der Siliziumphotodiode ist zudem exakt bekannt. Eine spektrale Zerlegung der von der Maßverkörperung abgegebenen Strahlung vor dem Einfallen auf das Detektionselement ist nicht notwendig, aber möglich. Zudem können optische Abbildungselemente im Strahlengang eingesetzt werden.

Bevorzugt ist die Leuchtdiode oder die Mehrzahl an Leuchtdioden als Detektionselement zur Detektion der von der Strahlungsquelle ausgestrahlten und von dem Scheibenelement reflektierten oder transmittierten Strahlung ausgebildet und vorgesehen. Statt einem separaten Detektionselement oder zusätzlich zu diesem kann die Leuchtdiode oder die Mehrzahl an Leuchtdioden selbst als Detektionselement verwendet werden. Voraussetzung ist nur, dass die Leuchtdiode oder die Mehrzahl an Leuchtdioden über eine gewisse Zeitdauer hinweg ausgeschaltet ist, so dass eine Strahlungsdetektion durch die Leuchtdiode(n) möglich ist.

Bevorzugt weist die Maßverkörperung eine Vielzahl an konzentrisch auf dem Scheibenelement angeordneten Bereichen auf, wobei sich eine spektrale Reflexionseigenschaft und/oder eine spektrale Transmissionseigenschaft aller Bereiche voneinander unterscheiden. Die Farbreihenfolge ist prinzipiell beliebig. Es ist aber auch möglich, in Anlehnung an übliche Bitmuster aus bekannten Drehgebern eine definierte Kodierung der Farbreihenfolge vorzusehen.

Vorteilhafterweise ist das Detektionselement dazu ausgebildet, die von mehr als einem Bereich transmittierte oder reflektierte Strahlung zu detektieren. Nimmt das Detektionselement mehr als einen der Bereiche der Maßverkörperung auf, so entstehen Zwischenwerte, die interpoliert werden können, was eine Auflösung des detektierten Drehwinkels erhöht.

Besonders bevorzugt weist die Maßverkörperung wenigstens zwei Inkrementalspuren auf, die sich hinsichtlich ihrer reflexions- und/oder Transmissionseigenschaften voneinander unterscheiden. Unter einer Inkrementalspur wird die interpolationsfähige Unterteilung von Winkelteilung des Vollkreises des Scheibenelements verstanden. Beispielsweise ist sowohl eine A-Spur und eine B- Spur mit einem Phasenversatz von 90 Grad vorgesehen, die so angeordnet sind, dass möglichst wenig Hintergrundrauschen oder Einkoppeln von Streu- oder gebeugten Strahlungsanteilen, die zu anderen Spuren gehören, auf das Detektionselement fällt. Im Fall der Verwendung von RGB-Leuchtdioden kann beispielsweise eine R-Spur, eine G-Spur und eine B-Spur vorgesehen sein.

Diese können zusätzlich eine laterale Berandung aufweisen, um einen Sinusfilter zu realisieren. Die laterale Berandung zweier zueinander um 90° verschobenen Inkrementalspuren verläuft dann "sinus-" bzw. "cosinus"-artig. Dies bedeutet, dass ein zeitlicher Verlauf der detektierten Strahlungsintensität gefiltert ist. Genau genommen werden höhere harmonische Anteile als eine Grundschwingung unterdrückt. Daraus resultieren, wie im Stand der Technik bekannt, ein verringerter Klirrfaktor und eine verbesserte Interpolierbarkeit der sin/cos-Spuren.

Herkömmliche Beleuchtung der Inkrementalspuren mit nur einer Wellenlänge kann aber durch imperfekte Reflexionen zu Übersprechen der Teilspuren führen und würde zu einer Phasenverzerrung führen, was wiederum die Interpolationsfähigkeit heruntersetzt.

Zudem lassen sich bei einer Vorsehung von Inkrementalspuren, die sich hinsichtlich einer spektralen Transitivität oder Reflexivität voneinander unterscheiden, Phasenbeziehungen der einzelnen Inkrementalspuren zueinander bestimmen, welche bei spektral selektiver Beleuchtung dann kein Übersprechen erzeugen.

Diese ändern sich, wenn das Scheibenelement eine Exzentrizität bezüglich des Detektionselements aufweist. Hierdurch lässt sich die Exzentrizität mittels des vorteilhaft weitergebildeten Drehgebers ermitteln und zur Korrektur des ermittelten Drehwinkels verwenden.

Die Inkrementalspuren können derart ausgebildet sein, dass eine Intensität der reflektierten oder transmittierten Strahlung in Drehrichtung des Scheibenelements sinusartig moduliert wird. Dadurch entsteht in der Drehbewegung durch die Abtastung durch das Detektionselement ein sinusartiges Signal, welches möglichst keine höheren harmonischen Anteile als die Grundschwingung aufweist.

Im Rahmen einer besonders bevorzugten Weiterbildung des Drehgebers ist das Scheibenelement außerhalb des wenigstens einen ersten und zweiten Bereichs derart ausgebildet, dass dort im Wesentlichen keine von der Strahlungsquelle ausgestrahlte Strahlung von dem Scheibenelement reflektiert oder transmittiert wird. Dadurch kann ein unerwünschtes Übersprechen von Strahlung, die außerhalb der beiden Bereiche reflektiert oder transmittiert wird, auf die zu detektierende, von den beiden Bereichen reflektierte oder transmittierte Strahlung verhindert oder zumindest verringert werden.

Die eingangs erwähnte Aufgabe wird auch durch ein Scheibenelement für einen Drehgeber nach Anspruch 11 gelöst.

Ein solches Scheibenelement ist mit einem rotierenden Element verbindbar, um dessen Rotation mitzumachen, wobei das Scheibenelement eine Maßverkörperung aufweist. Es ist dadurch gekennzeichnet, dass die Maßverkörperung auf dem Scheibenelement wenigstens einen ersten Bereich und einen zweiten Bereich aufweist, die an voneinander verschiedenen Positionen auf dem Scheibenelement angeordnet sind, wobei sich eine spektrale Reflexionseigenschaft und/oder eine spektrale Transmissionseigenschaft der beiden Bereiche voneinander unterscheiden.

Hinsichtlich der hiermit verbundenen Vorteile gegenüber den bislang bekannten Scheibenelementen sei auf die vorstehenden Erläuterungen verwiesen.

Vorzugsweise weist die Maßverkörperung eine Vielzahl an konzentrisch auf dem Scheibenelement angeordneten Bereichen auf, wobei sich eine spektrale Reflexionseigenschaft und/oder eine spektrale Transmissionseigenschaft aller Bereiche voneinander unterscheiden.

Bevorzugt ist das Scheibenelement außerhalb des wenigstens einen ersten und zweiten Bereichs derart ausgebildet, dass dort im Wesentlichen keine von der Strahlungsquelle ausgestrahlte Strahlung von dem Scheibenelement reflektiert oder transmittiert wird.

Im Zuge einer vorteilhaften Verwendung wird das Scheibenelement in einem Drehgeber zur Ermittlung einer Drehwinkelposition und/oder einer Drehgeschwindigkeit und/oder einer Drehrichtung eines rotierenden Elements, insbesondere eines Servoantriebs, eingesetzt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird. Es zeigen:
- FIG 1: einen erfindungsgemäßen Drehgeber in einer Perspektivskizze;
- FIG 2: ein erfindungsgemäßes Scheibenelement in einer Draufsicht; und
- FIG 3: eine Maßverkörperung eines erfindungsgemäßen Scheibenelements mit drei sich spektral voneinander unterscheidenden Inkrementalspuren.

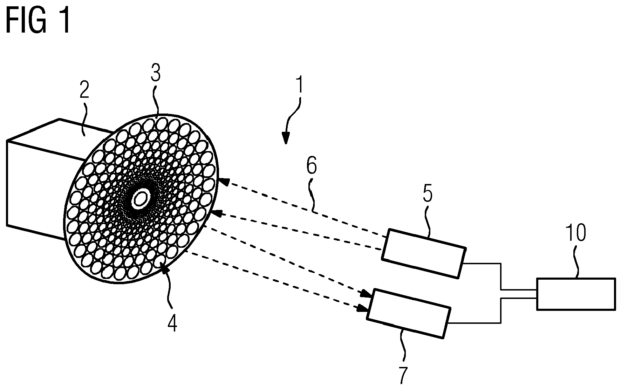

In FIG 1 ist ein Drehgeber 1 dargestellt, welcher ein rotierendes Element 2, ein mit dem rotierenden Element 2 verbundenes Scheibenelement 3, eine Strahlungsquelle 5 und ein Detektionselement 7 umfasst.

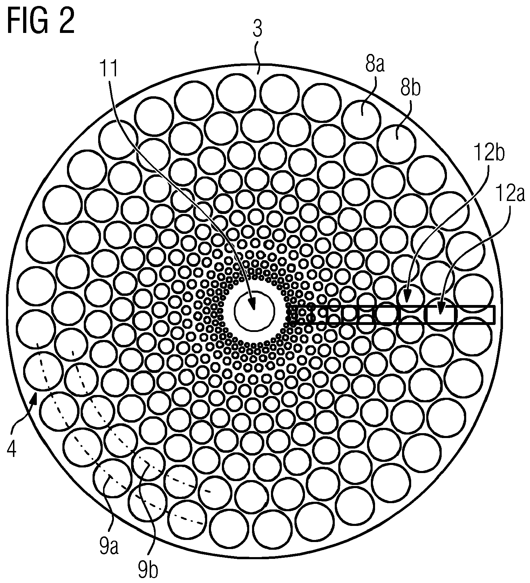

Bei der Strahlungsquelle 5 handelt es sich um eine Mehrzahl von Leuchtdioden, die dazu ausgebildet sind, jeweils eine Strahlung 6 mit sich spektral voneinander unterscheidenden Strahlungsintensitäten auszustrahlen. Die Strahlung 6 wird auf das Scheibenelement 3 abgestrahlt, welches von der Strahlungsquelle 5 beabstandet angeordnet ist und eine Maßverkörperung 4 aufweist, die im Folgenden noch näher erläutert wird, insbesondere anhand der Beschreibung von FIG 2. Das Scheibenelement 3 ist mit dem rotierenden Element 2 verbunden, das beispielsweise ein Servoantrieb ist.

Die von den Leuchtdioden 5 abgestrahlte Strahlung 6 wird von der Maßverkörperung 4 des Scheibenelements 3 reflektiert und gelangt in ein Detektionselement 7, das in diesem Beispiel eine Anordnung von zehn Photodioden ist. Sowohl die Strahlungsquelle 5 als auch das Detektionselement 7 werden von einer nicht näher spezifizierten Steuer- und Auswerteeinheit 10 angesteuert.

Die Leuchtdioden 5 sind dazu ausgebildet und vorgesehen, die Strahlung 6 mit einer Strahlungsintensität, die eine von Null verschiedene spektrale Breite aufweist, auf das Scheibenelement 3 mit der darauf befindlichen Maßverkörperung 4 abzustrahlen. Ein Drehwinkel des rotierenden Elements 2 kann mittels einer Detektion einer Intensität der von dem Scheibenelement 3 zurückgestrahlten Strahlung 6 ermittelt werden. Dabei ist die von den Photodioden 7 gemessene Strahlungsintensität von der Strahlungsintensität der von den Leuchtdioden 5 abgestrahlten Strahlung 6, den spektral selektiven Reflexions- oder Transmissionseigenschaften des Scheibenelements 3 bzw. der Maßverkörperung 4 und der (bekannten) spektralen Sensitivität der Photodioden 7 abhängig.

In FIG 2 ist die auf dem Scheibenelement 3 angeordnete Maßverkörperung 4 dargestellt. Dabei handelt es sich um zwölf konzentrisch angeordnete spektral selektive Inkrementalspuren 9a, 9b. Jede Inkrementalspur 9a, 9b umfasst 32 Bereiche 8a, 8b mit verschiedenen Farbtönen (was aufgrund der Schwarz-Weiß Darstellung in FIG 2 nicht abgebildet werden kann). Die verschiedenen Inkrementalspuren 9a, 9b weisen eine unterschiedliche Phasenlage zueinander auf, d.h. sie sind gegeneinander in Umfangsrichtung des Scheibenelements 3 verschoben. Die Bereiche 8a, 8b selbst sind kreisförmig ausgestaltet, wobei ein Durchmesser der Bereiche 8a, 8b zu dem Mittelpunkt 11 hin abnimmt. Die erzielbare Auflösung bei der Ermittlung des Drehwinkels ergibt sich im vorliegenden Beispiel zu 360 Grad des Vollkreises / 32 Bereiche / 12 Inkrementalspuren = 0,9 Grad.

Diese Auflösung wird dadurch erhöht, dass die zehn Photodioden Aufnahmefenster 12a, 12b aufweisen, die teilweise mehrere Bereiche 8a, 8b abdecken, so dass Zwischenwerte zur Interpolation des Drehwinkels genutzt werden können.

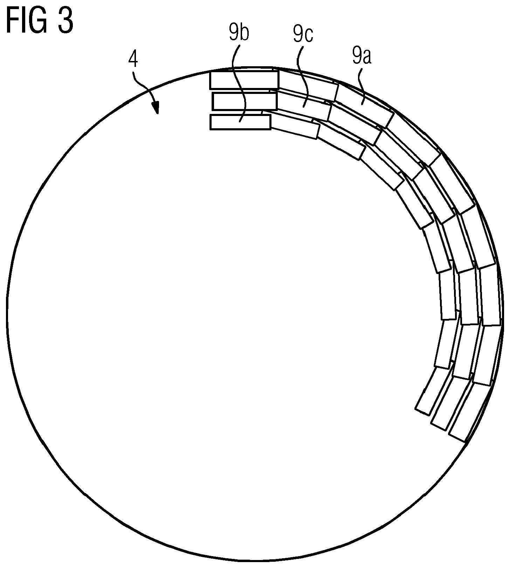

In Figur 3 ist ein Auszug einer Maßverkörperung 4 dargestellt, die drei Inkrementalspuren 9a, 9b, 9c aufweist. Eine erste Inkrementalspur 9a entspricht einer R(ot)-Spur, eine zweite Inkrementalspur 9b einer G(rün)-Spur und eine dritte Inkrementalspur 9c einer B(lau)-Spur.

Durch die Verwendung einer Mehrzahl von Inkrementalspuren 9a, 9b, 9c, die sich hinsichtlich einer spektralen Transitivität oder Reflexivität voneinander unterscheiden, können Phasenbeziehungen der einzelnen Inkrementalspuren 9a, 9b, 9c zueinander bestimmt werden, welche bei einer spektral selektiver Beleuchtung kein Übersprechen erzeugen.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Drehgeber (1) zur Ermittlung einer Drehwinkelposition und/oder einer Drehgeschwindigkeit und/oder einer Drehrichtung eines rotierenden Elements (2), insbesondere eines Servoantriebs, umfassend:
- ein Scheibenelement (3), das mit dem rotierenden Element (2) verbindbar ist, um dessen Rotation mitzumachen, wobei das Element eine Maßverkörperung (4) aufweist,
- wenigstens eine Strahlungsquelle (5), die beabstandet von dem Scheibenelement (3) angeordnet ist, und dazu ausgebildet und vorgesehen ist, eine Strahlung (6) auf das Scheibenelement (3) auszustrahlen, wobei eine Strahlungsintensität der Strahlung (6) eine von Null verschiedene spektrale Breite aufweist, und
- wenigstens ein Detektionselement (7) zur Detektion der von der Strahlungsquelle ausgestrahlten und von dem Scheibenelement reflektierten oder transmittierten Strahlung (6),
**dadurch gekennzeichnet, dass**
die Maßverkörperung (4) auf dem Scheibenelement (3) wenigstens einen ersten Bereich (8a) und einen zweiten Bereich (8b) aufweist, die an voneinander verschiedenen Positionen auf dem Scheibenelement (3) angeordnet sind, wobei sich eine spektrale Reflexionseigenschaft und/oder eine spektrale Transmissionseigenschaft der beiden Bereiche (8a, 8b) voneinander unterscheiden.

2. Drehgeber (1) nach Anspruch 1, bei dem die Maßverkörperung (4) mittels eines Druckverfahrens hergestellt wurde, wobei die gedruckte Maßverkörperung vorzugsweise mit einer Schutzschicht, insbesondere Epoxidharz, überzogen wurde.

3. Drehgeber (1) nach Anspruch 1 oder 2, bei dem der erste Bereich und der zweite Bereich der Maßverkörperung (4) eine unterschiedliche Schichtdicke aufweisen oder eine unterschiedliche Anzahl an übereinander angeordneten Schichten aufweisen.

4. Drehgeber (1) nach einem der vorangegangenen Ansprüche, bei dem die Strahlungsquelle (5) wenigstens eine Leuchtdiode ist, vorzugsweise eine Mehrzahl an Leuchtdioden, die bevorzugt dazu ausgebildet sind, Strahlung (6) mit sich spektral voneinander unterscheidenden Strahlungsintensitäten auszustrahlen, wobei die Strahlungsquelle (5) besonders bevorzugt wenigstens eine RGB-Leuchtdiode umfasst.

5. Drehgeber (1) nach einem der vorangegangenen Ansprüche, bei dem das Detektionselement (7) zur Detektion der von der Strahlungsquelle (5) ausgestrahlten und von dem Scheibenelement (3) reflektierten oder transmittierten Strahlung (6) wenigstens eine Photodiode, vorzugsweise eine Mehrzahl an Photodioden, ist, wobei die Photodiode oder die Mehrzahl an Photodioden bevorzugt auf Basis von Silizium ausgebildet ist.

6. Drehgeber (1) nach Anspruch 4, bei dem die Leuchtdiode oder die Mehrzahl an Leuchtdioden als Detektionselement (7) zur Detektion der von der Strahlungsquelle (5) ausgestrahlten und von dem Scheibenelement (3) reflektierten oder transmittierten Strahlung (6) ausgebildet und vorgesehen ist.

7. Drehgeber (1) nach einem der vorangegangenen Ansprüche, bei dem die Maßverkörperung (4) eine Vielzahl an konzentrisch auf dem Scheibenelement (3) angeordneten Bereichen (8a, 8b) aufweist, wobei sich eine spektrale Reflexionseigenschaft und/oder eine spektrale Transmissionseigenschaft aller Bereiche (8a, 8b) voneinander unterscheiden.

8. Drehgeber (1) nach Anspruch 7, bei dem das Detektionselement (7) dazu ausgebildet ist, die von mehr als einem Bereich (8a, 8b) transmittierte oder reflektierte Strahlung (6) zu detektieren.

9. Drehgeber (1) nach Anspruch 8, bei dem die Maßverkörperung (4) wenigstens zwei Inkrementalspuren (9a, 9b, 9c) aufweist, die sich hinsichtlich ihrer reflexions- und/oder Transmissionseigenschaften voneinander unterscheiden.

10. Drehgeber (1) nach einem der vorangegangenen Ansprüche, bei dem das Scheibenelement (3) außerhalb des wenigstens einen ersten und zweiten Bereichs (8a, 8b) derart ausgebildet ist, dass dort im Wesentlichen keine von der Strahlungsquelle (5) ausgestrahlte Strahlung (6) von dem Scheibenelement (3) reflektiert oder transmittiert wird.

11. Scheibenelement (3) für einen Drehgeber (1), insbesondere nach einem der Ansprüche 1 bis 10, das mit einem rotierenden Element (2) verbindbar ist, um dessen Rotation mitzumachen, wobei das Scheibenelement (3) eine Maßverkörperung (4) aufweist,
**dadurch gekennzeichnet, dass**
die Maßverkörperung (4) auf dem Scheibenelement (3) wenigstens einen ersten Bereich (8a) und einen zweiten Bereich (8b) aufweist, die an voneinander verschiedenen Positionen auf dem Scheibenelement (3) angeordnet sind, wobei sich eine spektrale Reflexionseigenschaft und/oder eine spektrale Transmissionseigenschaft der beiden Bereiche (8a, 8b) voneinander unterscheiden.

12. Scheibenelement (3) nach Anspruch 11, bei dem die Maßverkörperung (4) eine Vielzahl an konzentrisch auf dem Scheibenelement (3) angeordneten Bereichen (8a, 8b) aufweist, wobei sich eine spektrale Reflexionseigenschaft und/oder eine spektrale Transmissionseigenschaft aller Bereiche (8a, 8b) voneinander unterscheiden.

13. Scheibenelement (3) nach Anspruch 11 oder 12, bei dem das Scheibenelement (3) außerhalb des wenigstens einen ersten und zweiten Bereichs (8a, 8b) derart ausgebildet ist, dass dort im Wesentlichen keine von der Strahlungsquelle (5) ausgestrahlte Strahlung (6) von dem Scheibenelement (3) reflektiert oder transmittiert wird.

14. Verwendung eines Scheibenelements (3) nach einem der Ansprüche 11 bis 13 in einem Drehgeber (1) zur Ermittlung einer Drehwinkelposition und/oder einer Drehgeschwindigkeit und/oder einer Drehrichtung eines rotierenden Elements (2), insbesondere eines Servoantriebs.
